# FASCICULE DE BREVET EUROPEEN

(11) **EP 1 236 185 B1**
(45) Date de publication et mention de la délivrance du brevet: **27.04.2005**
(21) Numéro de dépôt: 00985415.9
(22) Date de dépôt: 05.12.2000
(51) Int. Cl.: G07F 7/10

(54) **SYSTEME DE PAIEMENT ELECTRONIQUE A TRAVERS UN RESEAU DE TELECOMMUNICATION**
ELEKTRONISCHES ZAHLUNGSSYSTEM ÜBER EIN TELEKOMMUNIKATIONSNETZWERK
ELECTRONIC PAYMENT SYSTEM THROUGH A TELECOMMUNICATION NETWORK

(30) Priorité: 09.12.1999 FR 9915644
(43) Date de publication de la demande: 04.09.2002
(73) Titulaire: FRANCE TELECOM, 75015 Paris (FR)
(72) Inventeur: VALLEE, Françoise, F-14480 Lantheuil (FR); HANNECART, Eric, F-14000 Caen (FR); MICHON, Philippe, F-14000 Caen (FR)
(74) Mandataire: Lemoyne, Didier
(86) Numéro de dépôt international: PCT/FR2000/003400
(87) Numéro de publication internationale: WO 2001/043087

(56) Documents cités:
- EP-A- 0 917 327
- WO-A-98/47116
- WO-A-99/23617
- FR-A- 2 771 205
- FR-A- 2 779 896

## Description

La présente invention concerne un système de paiement électronique à travers un réseau de télécommunication. Elle concerne également un serveur de paiement et un moyen de redirection de messages par ledit système de paiement électronique.

L'invention trouve une application particulièrement avantageuse dans le domaine du commerce électronique.

Le développement des télécommunications via le World Wide Web (le « Web ») et l'Intemet a eu pour conséquence de promouvoir le commerce électronique sur une vaste échelle. D'une manière générale, une transaction de commerce électronique s'effectue au moyen d'un système de paiement électronique à travers le réseau de télécommunication, ici le Web, entre un vendeur équipé d'un serveur connecté audit réseau et un client muni de moyens de navigation et de paiement électronique aptes à établir une liaison sur le réseau avec le serveur du vendeur et à effectuer un paiement auprès dudit vendeur. Le plus souvent, ces moyens de navigation et de paiement électronique sont constitués par un ordinateur, un micro-ordinateur du type PC par exemple, utilisé comme moyen de navigation sur le réseau, et par un lecteur de cartes de paiement à puce, relié audit ordinateur, assurant la fonction de paiement électronique.

Bien entendu, les transactions réalisées sur le réseau de télécommunication doivent être hautement sécurisées de manière à éviter toute interception des messages échangés entre le vendeur, le client et le gestionnaire de télépaiement, et à procéder à toutes les vérifications d'authentification nécessaires. C'est ainsi que divers protocoles de paiement sécurisé ont été proposés, tels que le protocole connu sous le nom SET pour « Secure Electronic Transaction ». Dans ce contexte, le serveur du vendeur est configuré afin de pouvoir mettre en oeuvre le protocole de paiement sécurisé choisi. De même, du côté client, ledit protocole de paiement sécurisé est inclus dans un logiciel/client de gestion de paiement, installé sur l'ordinateur du client, et qui, outre la sécurisation des transactions, est capable d'effectuer d'autres opérations, comme la gestion des historiques, et possède une interface avec lecteur de cartes à puce afin de prendre en compte l'extension du protocole SET qui permet d'utiliser les puces des cartes (voir par exemple WO-A-9 923 617).

Toutefois, les systèmes de paiement électronique connus décrits plus haut présentent un certain nombre d'inconvénients. En effet, l'installation d'un logiciel lourd, comme le logiciel/client de gestion de paiement, sur l'ordinateur du client pose des problèmes au niveau du téléchargement, de la mise à jour et de la taille occupée en mémoire et sur le disque dur. D'autre part, le système est entièrement installé sur un poste fixe, à savoir l'ordinateur, ce qui représente un frein à la mobilité du client.

Aussi, le problème technique à résoudre par l'objet de la présente invention est de proposer un système de paiement électronique à travers un réseau de télécommunication entre, d'une part, un vendeur équipé d'un serveur connecté audit réseau et apte à mettre en oeuvre un protocole de paiement sécurisé par cartes à puce, et, d'autre part, un client muni de moyens de navigation et de paiement électronique aptes à établir une liaison sur le réseau avec le serveur du vendeur et à effectuer un paiement auprès dudit vendeur selon un logiciel/client de gestion de paiement incluant ledit protocole de paiement sécurisé, système de paiement électronique qui permettrait à la fois une certaine mobilité du client par rapport à l'ordinateur fixe, une simplification de la configuration de l'ordinateur et un allègement de ses capacités de mémoire.

La solution au problème technique posé consiste, selon la présente invention, en ce que, ledit logiciel/client de gestion de paiement étant installé sur un serveur de paiement sur le réseau de télécommunication, ledit système comprend, côté client :
- un moyen de navigation,
- un moyen de paiement électronique constitué par un terminal mobile relié audit réseau et comportant un lecteur de cartes de paiement à puce,
- un moyen de redirection de messages apte à transmettre audit serveur de paiement au moins le numéro d'appel dudit terminal mobile.

Ainsi, on comprend que le déport du logiciel/client de gestion de paiement sur le serveur de paiement allège considérablement le système conforme à l'invention au niveau du client. En particulier, il n'est pas nécessaire d'effectuer de téléchargement dudit logiciel/client ni de stockage en mémoire, ni même de mises à jour, celles-ci étant faites directement sur le serveur de paiement. De plus, l'utilisation d'un terminal mobile comme moyen de paiement confère au client une plus grande autonomie de mouvement qu'avec un ordinateur fixe équipé d'un lecteur de cartes à puce.

Selon un premier mode de réalisation du système de paiement électronique, objet de l'invention, ledit moyen de navigation est constitué par un ordinateur, le moyen de redirection étant un logiciel de communication installé sur ledit ordinateur. Dans ce cas, le terminal mobile est uniquement dédié au paiement électronique.

Deux variantes d'exécution de ce premier mode de réalisation peuvent être envisagées. Une première variante prévoit que ledit moyen de redirection est également apte à transmettre au serveur de paiement le numéro d'appel du serveur du vendeur, la gestion du paiement s'effectuant entre le serveur de paiement et le terminal mobile et le serveur du vendeur. Conformément à une deuxième variante, ledit moyen de redirection est apte à rediriger des messages entre le serveur de paiement et le serveur du vendeur, la gestion du paiement s'effectuant entre le serveur de paiement et le terminal mobile et le serveur du vendeur via le moyen de redirection.

Selon deux autres modes de réalisation de l'invention, ledit moyen de navigation est constitué par le terminal mobile, ledit moyen de redirection étant un logiciel de communication installé sur une passerelle dudit réseau de télécommunication ou sur le terminal mobile. Dans ces deux cas, le terminal mobile sert à la fois au paiement électronique et à la navigation.

Enfin, ledit terminal mobile est, soit un téléphone portable du type GSM, soit un assistant personnel, connu sous le sigle PDA pour « Personal Digital Assistant ».

Selon l'invention, un serveur de paiement pour un système de paiement électronique à travers un réseau de télécommunication entre, d'une part, un vendeur, équipé d'un serveur connecté audit réseau et apte à mettre en oeuvre un protocole de paiement sécurisé par cartes à puce, et, d'autre part, un client muni de moyens de navigation et de paiement électronique aptes à établir une liaison sur le réseau avec le serveur du vendeur et à effectuer un paiement auprès dudit vendeur selon un logiciel/client de gestion de paiement incluant ledit protocole de paiement sécurisé, est notamment remarquable en ce que ledit serveur de paiement est relié audit réseau de télécommunication et comprend ledit logiciel/client de gestion de paiement sécurisé.

Selon l'invention également, un moyen de redirection de messages pour un système de paiement électronique à travers un réseau de télécommunication entre, d'une part, un vendeur équipé d'un serveur connecté audit réseau et apte à mettre en oeuvre un protocole de paiement sécurisé par cartes à puce, et, d'autre part, un client muni de moyens de navigation et de paiement électronique aptes à établir une liaison sur le réseau avec le serveur du vendeur et à effectuer un paiement auprès dudit vendeur selon un logiciel/client de gestion de paiement incluant ledit protocole de paiement sécurisé, est notamment remarquable en ce que ledit moyen de redirection de messages est apte à transmettre au moins le numéro d'appel d'un terminal mobile de paiement relié audit réseau et comportant un lecteur de cartes de paiement à puce, à un serveur de paiement relié audit réseau et comprenant ledit logiciel/client de gestion de paiement sécurisé.

La description qui va suivre en regard des dessins annexés, donnés à titre d'exemples non limitatifs, fera bien comprendre en quoi consiste l'invention et comment elle peut être réalisée.

La figure 1 est un schéma d'un premier mode de réalisation du système de paiement électronique conforme à l'invention.

La figure 2 est un diagramme d'échange d'informations relatif au mode de réalisation de la figure 1.

La figure 3 est un schéma d'un deuxième mode de réalisation du système de paiement électronique conforme à l'invention.

La figure 4 est un diagramme d'échange d'informations relatif au mode de réalisation de la figure 3.

La figure 5 est un schéma d'un troisième mode de réalisation du système de paiement électronique conforme à l'invention.

La figure 6 est un schéma d'un quatrième mode de réalisation du système de paiement électronique conforme à l'invention.

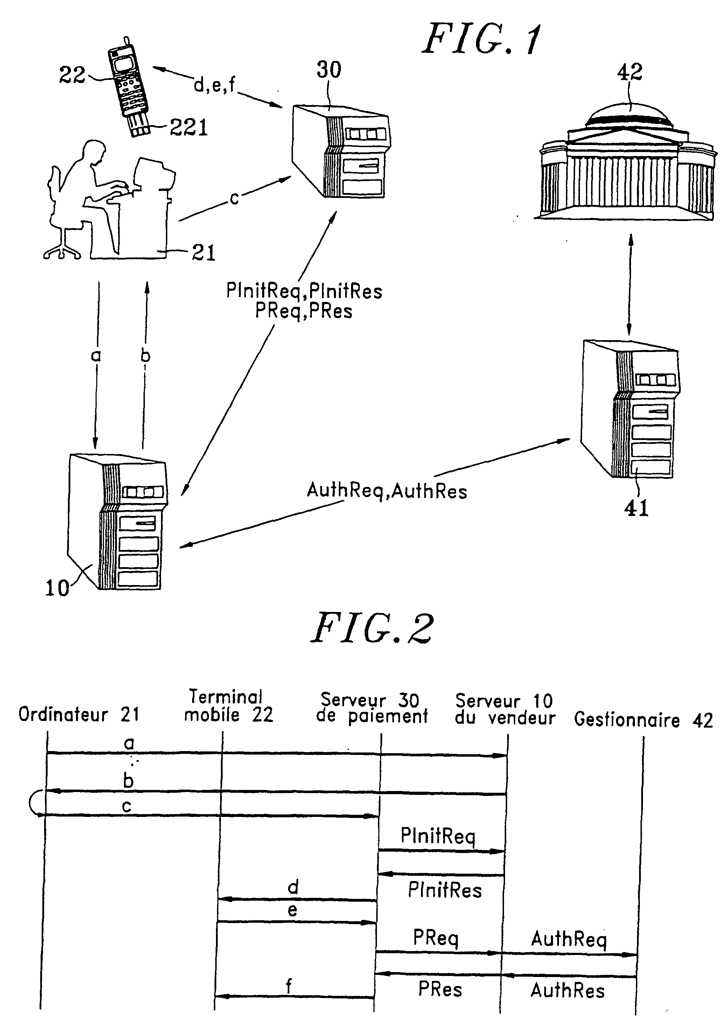

Sur la figure 1 est représenté schématiquement un système de paiement électronique à travers un réseau de télécommunication, par exemple le réseau Internet sur le Web. Dans ce système, un vendeur est équipé d'un serveur 10 connecté au réseau et apte à mettre en oeuvre un protocole de paiement sécurisé par cartes à puce. Ce protocole peut être le protocole SET ( « Secure Electronic Transaction ») développé par des opérateurs de carte bancaire et dont les spécifications sont publiques et disponibles à l'adresse Internet www.setco.org. Une extension de ce protocole aux cartes à puce a été pour sa part développée par la société Cybercom. De son côté, un client dispose de moyens de navigation et de paiement électronique qui, dans l'exemple de la figure 1, sont constitués, d'une part, d'un ordinateur 21, apte à établir une liaison sur le réseau avec le serveur 10 du vendeur et essentiellement utilisé pour la navigation sur le Web, la consultation du site du vendeur et le passage de commandes, et, d'autre part, d'un terminal mobile 22 relié au réseau et comportant un lecteur de carte 221 de paiement à puce. Dans le mode de réalisation montré à la figure 1, ledit terminal mobile 22 est un téléphone portable du type GSM, mais il pourrait tout aussi bien être un assistant personnel (PDA) muni d'un lecteur de cartes à puce.

Pour réaliser des transactions sécurisées avec le vendeur, le client dispose d'un logiciel/client de gestion de paiement incluant, entre autres, le protocole SET avec extension aux cartes à puce. Ce logiciel/client est également capable d'effectuer d'autres opérations, telles que la gestion de données relatives au client comme les historiques, les plafonds de paiement, les points de fidélité. Conformément à l'exemple de réalisation de la figure 1, ledit logiciel/client de gestion de paiement est installé sur un serveur 30 de paiement sur le réseau, et non pas sur l'ordinateur 21 du client, ce qui en simplifie considérablement la configuration et le fonctionnement. L'ordinateur 21 dispose cependant d'un logiciel de communication servant de moyen de redirection des messages vers le serveur 30 de paiement, notamment pour transmettre audit serveur 30 le numéro d'appel du terminal mobile 22 ainsi que celui du serveur 10 du vendeur.

Ainsi, comme on le verra de manière plus détaillée en référence à la figure 2, la transaction électronique entre le vendeur et le client se déroule de la manière suivante. Après une phase initiale de communication entre le serveur 10 du vendeur et l'ordinateur 21 du client, le serveur 30 de paiement reçoit du client via l'ordinateur 21 le numéro d'appel du terminal mobile 22, éventuellement des données d'authentification, et le numéro d'appel du serveur 10 du vendeur. A partir de ce moment, les échanges d'informations transactionnelles s'effectuent uniquement entre le serveur 10 du vendeur, le serveur 30 de paiement, lequel représente alors le client, et le terminal mobile 22 du client, l'ordinateur 21 n'intervenant plus dans les échanges d'informations. Plus précisément, les communications entre le serveur 10 du vendeur et le serveur 30 de paiement sont régies par le protocole SET de sécurisation, de même que les communications de compensation entre le serveur 10 du vendeur et l'interface 41 d'acquisition de paiement vers le gestionnaire 42 télépaiement . Par contre, les échanges entre le serveur 30 et le terminal mobile 22 se font hors sécurisation du protocole SET, ce qui ne présente que peu d'inconvénients car le risque d'interception à ce niveau est relativement faible.

Un exemple d'échange d'informations au sein du système de paiement électronique de la figure 1 va maintenant être décrit plus spécialement en regard de la figure 2.

Après avoir fait son choix d'achat sur l'ordinateur 21 de navigation, le client envoie en direction du serveur 10 du vendeur un message a d'ordre de paiement. Le serveur 10 répond par un message **b** de réveil accompagné du numéro d'appel du serveur 10. Ce message **b** est redirigé par le moyen de redirection de l'ordinateur 21 vers le serveur 30 de paiement, le message **c** ainsi redirigé contient également le numéro d'appel du terminal mobile 22. A ce moment, le serveur 30 de paiement connaît tous les numéros d'appel dont il a besoin pour gérer la transaction, à savoir les numéros du serveur 10 du vendeur et du terminal mobile 21. Il faut également noter que le message **c** redirigé peut éventuellement contenir une donnée d'authentification du client.

Ensuite, le serveur 30 de paiement échange avec le serveur 10 du vendeur des messages PlnitReq et PlnitRes conformes au protocole SET ; il s'agit essentiellement d'une requête et d'un envoi au serveur 30 d'un certificat propre au vendeur. Puis, le serveur 30 de paiement appelle le terminal mobile 22 pour demander dans un message **d** notamment le numéro de la carte 221 de paiement à puce et la signature du client. Ces informations sont fournies par le terminal mobile 22 dans un message **e** de réponse. Les messages **d** et **e** sont échangés selon divers protocoles possibles, tels que les protocoles SMS (« Short Message Service »), WAP (« Wireless Application Protocol ») ou encore HTTP.

La suite de la transaction s'effectue selon le protocole SET étendu: le serveur 30 constitue un message comportant, entre autres, le numéro de la carte 221, la signature du client, le montant de l'achat, l'identification du produit acheté, l'identification du vendeur. Une partie de ces informations sont transmises au serveur 10 du vendeur sous la forme du message PReq, telles que le montant de l'achat et l'identification du produit acheté, tandis que d'autres, comme le numéro de carte et la signature du client, sont envoyées dans un message AuthReq via le serveur 10 à l'interface 41 et au gestionnaire 42. Ce dernier vérifie la signature du client et l'absence d'opposition à son encontre. En cas de vérification positive, l'opérateur envoie un message d'autorisation AuthRes qui est relayé vers le serveur 30 par le serveur 10 du vendeur dans un message PRes puis vers le terminal 22 du client dans un message **f** de confirmation de la transaction.

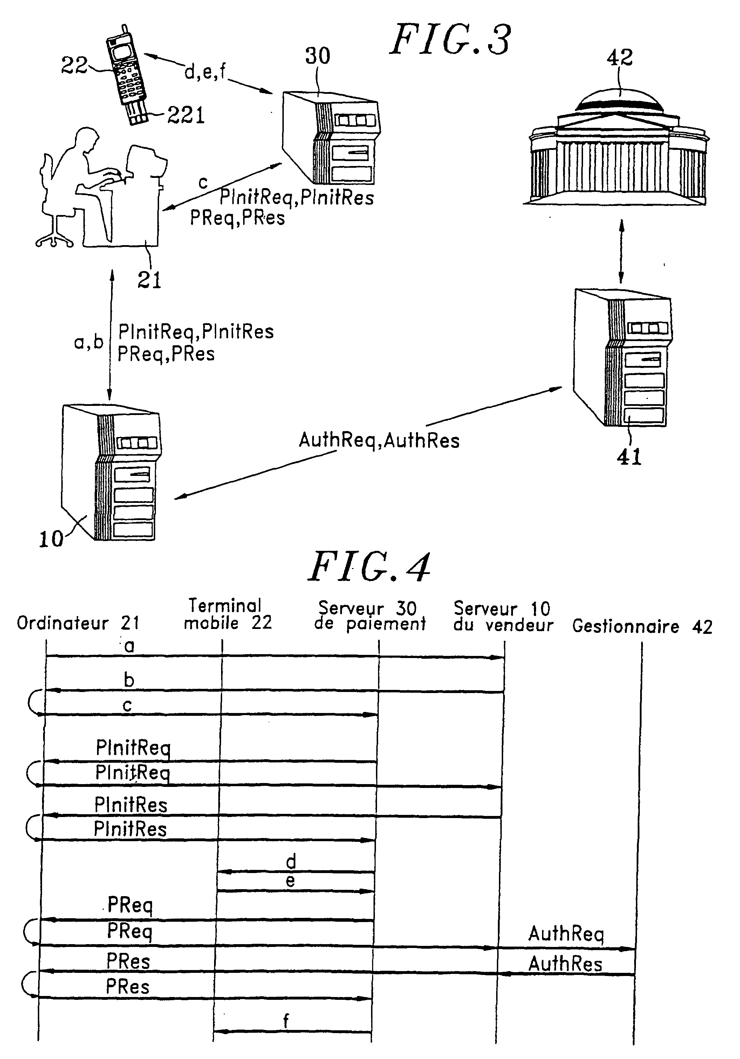

Le deuxième mode de réalisation de l'invention montré sur la figure 3 diffère de celui décrit en référence aux figures 1 et 2 en ce que les échanges d'informations entre le serveur 30 de paiement et le serveur 10 du vendeur ne se font plus directement mais par l'intermédiaire du moyen de redirection de l'ordinateur 21. Dans ce cas, le numéro d'appel du serveur 10 du vendeur n'a plus à être communiqué au serveur 30 de paiement par le moyen de redirection.

La figure 4 donne le diagramme d'échange d'informations correspondant au mode de réalisation de la figure 3. On notera par rapport au diagramme de la figure 2 que les messages du serveur 30 de paiement à destination du serveur 10 du vendeur sont redirigés par l'ordinateur 22 du client et réciproquement.

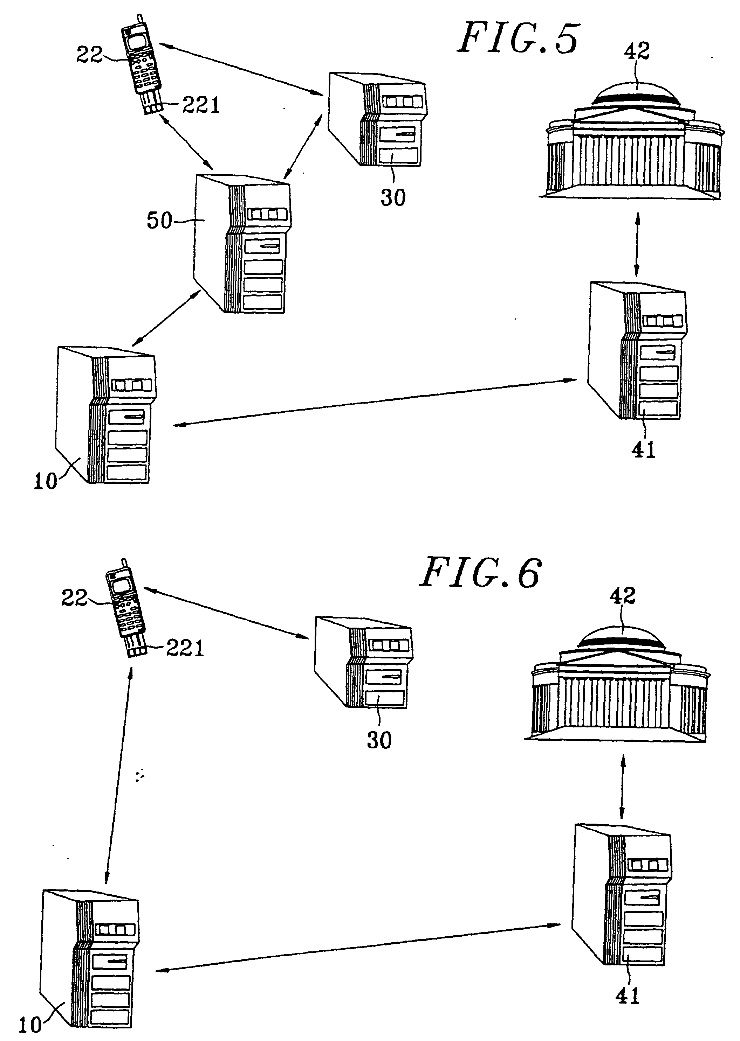

Sur les figures 5 et 6 sont représentés deux autres modes de réalisation dans lesquels le moyen de navigation est également constitué par le terminal mobile 22, ceci étant possible par mise en oeuvre du protocole WAP. Dans ce cas, le moyen de redirection peut être installé sur une passerelle 50 de communication (« Proxy ») entre le terminal mobile 22 et le réseau de télécommunication, ici le Web, comme l'indique la figure 5. Si la capacité du terminal mobile 22 est suffisante, le moyen de redirection peut être installé sur le terminal 22 lui-même, ainsi que le montre la figure 6. Les diagrammes d'échange d'informations sont identiques à ceux de figures 2 et 4.

## Revendications

1. Système de paiement électronique à travers un réseau de télécommunication entre, d'une part, un vendeur équipé d'un serveur (10) connecté audit réseau et apte à mettre en oeuvre un protocole (SET) de paiement sécurisé par cartes à puce, et, d'autre part, un client muni de moyens (21,22) de navigation et de paiement électronique aptes à établir une liaison sur le réseau avec le serveur (10) du vendeur et à effectuer un paiement auprès dudit vendeur selon un logiciel/client de gestion de paiement incluant ledit protocole (SET) de paiement sécurisé, **caractérisé en ce que**, ledit logiciel/client de gestion de paiement étant installé sur un serveur (30) de paiement sur le réseau de télécommunication, ledit système comprend, côté client:
- un moyen (21;22) de navigation,
- un moyen de paiement électronique constitué par un terminal mobile (22) relié audit réseau et comportant un lecteur de cartes (221) de paiement à puce,
- un moyen de redirection de messages apte à transmettre audit serveur (30) de paiement au moins le numéro d'appel dudit terminal mobile (22) .

2. Système selon la revendication 1, **caractérisé en ce que** ledit moyen de navigation est constitué par un ordinateur (21), le moyen de redirection étant un logiciel de communication installé sur ledit ordinateur (21).

3. Système selon la revendication 2, **caractérisé en ce que** ledit moyen de redirection est également apte à transmettre au serveur (30) de paiement le numéro d'appel du serveur (10) du vendeur, la gestion du paiement s'effectuant entre le serveur (30) de paiement et le terminal mobile (22) et le serveur (10) du vendeur.

4. Système selon la revendication 2, **caractérisé en ce que** ledit moyen de redirection est apte à rediriger des messages entre le serveur (30) de paiement et le serveur (10) du vendeur, la gestion du paiement s'effectuant entre le serveur (30) de paiement et le terminal mobile (22) et le serveur (10) du vendeur via le moyen de redirection.

5. Système selon la revendication 1, **caractérisé en ce que** ledit moyen de navigation est constitué par le terminal mobile (22), le moyen de redirection étant un logiciel de communication installé sur une passerelle (50) dudit réseau de communication.

6. Système selon la revendication 1, **caractérisé en ce que** ledit moyen de navigation est constitué par le terminal mobile (22), le moyen de redirection étant un logiciel de communication installé sur ledit terminal mobile.

7. Système selon l'une quelconque des revendications 1 à 6, **caractérisé en ce que** ledit terminal mobile est un téléphone portable (22) du type GSM.

8. Système selon l'une quelconque des revendications 1 à 6, **caractérisé en ce que** ledit terminal mobile est un assistant personnel (PDA).

9. Système selon l'une quelconque des revendications 1 à 8, **caractérisé en ce que** ledit moyen de redirection est également apte à transmettre au serveur (30) de paiement une donnée d'authentification du client.

10. Serveur de paiement pour un système de paiement électronique à travers un réseau de télécommunication entre, d'une part, un vendeur équipé d'un serveur (10) connecté audit réseau et apte à mettre en oeuvre un protocole (SET) de paiement sécurisé par cartes à puce, et, d'autre part, un client muni de moyens (21,22) de navigation et de paiement électronique aptes à établir une liaison sur le réseau avec le serveur (10) du vendeur et à effectuer un paiement auprès dudit vendeur selon un logiciel/client de gestion de paiement incluant ledit protocole (SET) de paiement sécurisé, **caractérisé en ce que** ledit serveur (30) de paiement est relié audit réseau de télécommunication et comprend ledit logiciel/client de gestion de paiement sécurisé.

11. Serveur de paiement selon la revendication 10, **caractérisé en ce qu'**il est apte à gérer des historiques de paiement, des plafonds de paiement, des points de fidélité, relatifs au client.

12. Moyen de redirection de messages pour un système de paiement électronique à travers un réseau de télécommunication entre, d'une part, un vendeur équipé d'un serveur (10) connecté audit réseau et apte à mettre en oeuvre un protocole (SET) de paiement sécurisé par cartes à puce, et, d'autre part, un client muni de moyens (21,22) de navigation et de paiement électronique aptes à établir une liaison sur le réseau avec le serveur (10) du vendeur et à effectuer un paiement auprès dudit vendeur selon un logiciel/client de gestion de paiement incluant ledit protocole (SET) de paiement sécurisé, **caractérisé en ce que** ledit moyen de redirection de messages est apte à transmettre au moins le numéro d'appel d'un terminal mobile (22) de paiement relié audit réseau et comportant un lecteur de cartes (221) de paiement à puce, à un serveur (30) de paiement relié audit réseau et comprenant ledit logiciel/client de gestion de paiement sécurisé.

13. Moyen de redirection de messages selon la revendication 12, **caractérisé en ce qu'**il est également apte à transmettre au serveur (30) de paiement le numéro d'appel du serveur (10) du vendeur, la gestion du paiement s'effectuant entre le serveur (30) de paiement et le terminal mobile (22) et le serveur (10) du vendeur.

14. Moyen de redirection de messages selon la revendication 12, **caractérisé en ce qu'**il est apte à rediriger des messages entre le serveur (30) de paiement et le serveur (10) du vendeur, la gestion du paiement s'effectuant entre le serveur (30) de paiement et le terminal mobile (22) et le serveur (10) du vendeur via le moyen de redirection.

15. Moyen de redirection de messages selon l'une quelconque des revendications 12 à 14, **caractérisé en ce qu'**il est également apte à transmettre au serveur (30) de paiement une donnée d'authentification du client.

## Patentansprüche

1. Elektronisches Zahlungssystem über ein Telekommunikationsnetz zwischen einerseits einem mit einem an das genannte Netz angeschlossenen und zur Umsetzung eines gesicherten Zahlungsprotokolls (SET) durch Chipkarten geeigneten Server (10) ausgerüsteten Verkäufer und andererseits einem mit Browser- (21, 22) und elektronischen Zahlungsmitteln ausgerüsteter Kunde, die zur Herstellung einer Verbindung auf dem Netz mit dem Server (10) des Verkäufers und zur Durchführung einer Zahlung bei dem genannten Verkäufer gemäß einer das genannte gesicherte Zahlungsprotokoll (SET) einschließenden Software- / Kundenzahlungsverwaltung geeignet sind, **dadurch gekennzeichnet, dass** das die genannte Software- / Kundenzahlungsverwaltung auf einem Zahlungsserver (30) auf dem Telekommunikationsnetz installiert ist, wobei das genannte System auf der Kundenseite Folgendes umfasst:
- ein Browsermittel (21, 22);
- ein durch ein mit dem genannten Netz verbundenes und ein Zahlungs-Chipkartenlesegerät (221) umfassendes mobiles Terminal (22) gebildetes elektronisches Zahlungsmittel,
- ein zur Übertragung von wenigstens der Rufnummer des genannten mobilen Terminals (22) auf den genannten Zahlungsserver (30) geeignetes Meldungsumleitungsmittel.

2. System gemäß Anspruch 1, **dadurch gekennzeichnet, dass** das genannte Browsermittel durch einen Computer (21) gebildet wird, wobei das Umleitungsmittel eine auf dem genannten Computer (21) installierte Kommunikations-Software ist.

3. System gemäß Anspruch 2, **dadurch gekennzeichnet, dass** das genannte Umleitungsmittel ebenfalls zur Übertragung der Rufnummer des Servers (10) des Verkäufers auf den Zahlungsserver (30) geeignet ist, wobei die Verwaltung der Zahlung zwischen dem Zahlungsserver (30) und dem mobilen Terminal (22) und dem Server (10) des Verkäufers erfolgt.

4. System gemäß Anspruch 2, **dadurch gekennzeichnet, dass** das genannte Umleitungsmittel zur Umleitung der Meldungen zwischen dem Zahlungsserver (30) und dem Server (10) des Verkäufers geeignet ist, wobei die Verwaltung der Zahlung zwischen dem Zahlungsserver (30) und dem mobilen Terminal (22) und dem Server (10) des Verkäufers über das Umleitungsmittel erfolgt.

5. System gemäß Anspruch 1, **dadurch gekennzeichnet, dass** das genannte Browsermittel durch das mobile Terminal (22) gebildet wird, wobei das Umleitungsmittel eine auf einer Netzwerkbrücke (50) des genannten Kommunikationsnetzwerks installierte Kommunikations-Software ist.

6. System gemäß Anspruch 1, **dadurch gekennzeichnet, dass** das genannte Browsermittel durch das mobile Terminal (22) gebildet wird, wobei das Umleitungsmittel eine auf dem genannten mobilen Terminal installierte Kommunikations-Software ist.

7. System gemäß Anspruch 1 bis 6, **dadurch gekennzeichnet, dass** das genannte mobile Terminal ein tragbares Telefon (22) vom Typ GSM ist.

8. System gemäß Anspruch 1 bis 6, **dadurch gekennzeichnet, dass** das genannte mobile Terminal ein persönlicher Assistent (PDA) ist.

9. System gemäß Anspruch 1 bis 8, **dadurch gekennzeichnet, dass** das genannte Umleitungsmittel ebenfalls zur Übertragung einer Authentifizierungsinformation des Kunden auf den Zahlungsserver (30) geeignet ist.

10. Zahlungsserver für ein elektronisches Zahlungssystem über ein Telekommunikationsnetz zwischen einerseits einem mit einem an das genannte Netz angeschlossenen und zur Umsetzung eines gesicherten Zahlungsprotokolls (SET) durch Chipkarten geeigneten Server (10) ausgerüsteten Verkäufer und andererseits einem mit Browser- (21, 22) und Zahlungsmitteln ausgerüsteten Kunden, die zur Herstellung einer Verbindung auf dem Netz mit dem Server (10) des Verkäufers und zur Durchführung einer Zahlung bei dem genannten Verkäufer gemäß einer das genannte gesicherte Zahlungsprotokoll (SET) beinhaltenden Software- / Kundenzahlungsverwaltung geeignet sind, **dadurch gekennzeichnet, dass** der genannte Zahlungsserver (30) an das genannte Telekommunikationsnetz angeschlossen ist und die genannte gesicherte Software- /Kundenzahlungsverwaltung umfasst.

11. Zahlungsserver gemäß Anspruch 10, **dadurch gekennzeichnet, dass** er zur Verwaltung der den Kunden betreffenden chronologischen Zahlungsabläufe, der Zahlungslimits, Treuepunkte geeignet ist.

12. Meldungsumleitungsmittel für ein elektronisches Zahlungssystem über ein Telekommunikationsnetz zwischen einerseits einem mit einem an das genannte Netz angeschlossenen und zur Umsetzung eines gesicherten Zahlungsprotokolls (SET) durch Chipkarten geeigneten Server (10) ausgerüsteten Verkäufer und andererseits einem mit Browser- (21, 22) und elektronischen Zahlungsmitteln ausgerüsteten Kunden, die zur Herstellung einer Verbindung mit dem Server (10) des Verkäufers auf dem Netz und zur Herstellung einer Zahlung bei dem genannten Verkäufer gemäß einer das genannte gesicherte Zahlungsprotokoll (SET) einschließenden Software- / Kundenzahlungsverwaltung geeignet sind, **dadurch gekennzeichnet, dass** das genannte Meldungsumleitungsmittel zur Übertragung von wenigstens der Rufnummer eines an das genannte Netz angeschlossenen und ein Chipkartenlesegerät (221) umfassenden mobilen Zahlungsterminals (22) auf einen an das genannte Netz angeschlossenen und die genannte Software- / gesicherte Kundenzahlungsverwaltung umfassenden Zahlungsserver (30) geeignet ist.

13. Meldungsumleitungsmittel gemäß Anspruch 12, **dadurch gekennzeichnet, dass** es ebenfalls zur Übertragung der Rufnummer des Servers (10) des Verkäufers an den Zahlungsserver (30) geeignet ist, wobei die Verwaltung der Zahlung zwischen dem Zahlungsserver (30) und dem mobilen Terminal (22) und dem Server (10) des Verkäufers erfolgt.

14. Meldungsumleitungsmittel gemäß Anspruch 12, **dadurch gekennzeichnet, dass** es zur Umleitung der Meldungen zwischen dem Zahlungsserver (30) und dem Server (10) des Verkäufers geeignet ist, wobei die Verwaltung der Zahlung zwischen dem Zahlungsserver (30) und dem mobilen Terminal (22) und dem Server (10) des Verkäufers über das Umleitungsmittel erfolgt.

15. Meldungsumleitungsmittel gemäß Anspruch 12 bis 14, **dadurch gekennzeichnet, dass** es ebenfalls zur Übertragung einer Authentifizierungsinformation des Kunden auf den Zahlungsserver (30) geeignet ist.

## Claims

1. A system for electronic payment via a telecommunications network between firstly a vendor having a server (10) connected to said network and suitable for implementing a secure protocol (SET) for payment by smart card, and secondly a client (21, 22) provided with navigation and electronic payment means suitable for establishing a connection over the network with the vendor's server (10) and for making a payment with said vendor using client software for handling payment that includes said Secure Payment Protocol (SET), the system being **characterized in that** said client software for handling payment is installed on a payment server (30) on the telecommunications network, and said system comprises, at the client end:
- navigation means (21;22),
- electronic payment means constituted by a mobile terminal (22) connected to said network and including a reader for reading payment smart cards (221); and
- means for redirecting messages suitable for transmitting at least the call number of said mobile terminal (22) to said payment server (30).

2. A system according to claim 1, **characterized in that** said navigation means is constituted by a computer (21), the redirection means being communications software installed on said computer (21) .

3. A system according to claim 2, **characterized in that** said redirection means is also suitable for transmitting the call number of the vendor's server (30) to the payment server (10), payment being handled between the payment server (30) and the mobile terminal (22) and the vendor's server.

4. A system according to claim 2, **characterized in that** said redirection means is suitable for redirecting messages between the payment server (30) and the vendor's server (10), the payment being handled between the payment server (30) and the mobile terminal (22) and the vendor's server (10) via the redirection means.

5. A system according to claim 1, **characterized in that** said navigation means is constituted by the mobile terminal (22), the redirection means being communications software installed on a gateway (50) of said communications network.

6. A system according to claim 1, **characterized in that** said navigation means is constituted by the mobile terminal (22), the redirection means being communications software installed on said mobile terminal.

7. A system according to any one of claims 1 to 6, **characterized in that** said mobile terminal is a mobile telephone (22) of the GSM type.

8. A system according to any one of claims 1 to 6, **characterized in that** said mobile terminal is a Personal Digital Assistant (PDA).

9. A system according to any one of claims 1 to 8, **characterized in that** said redirection means is also suitable for transmitting client authentication data to the payment server (30).

10. A payment server for a system for electronic payment via a telecommunications network between firstly a vendor having a server (10) connected to said network and suitable for implementing a secure protocol (SET) for payment by smart card, and secondly a client having navigation (21, 22) and electronic payment means suitable for setting up a connection over the network with the vendor's server (10) and for making a payment to said vendor using client software for handling payment that includes said secure payment protocol (SET), said payment server (30) being **characterized in that** it is connected to said telecommunications network and contains said client software for secure payment handling.

11. A payment server according to claim (10), **characterized in that** it is suitable for handling payment audit trails, payment ceilings, loyalty points, all relating to the client.

12. Message redirection means for a system for electronic payment via a telecommunications network between firstly a vendor having a server (10) connected to said network and suitable for implementing a secure protocol (SET) for payment by smart cards, and secondly a client having navigation (21, 22) and electronic payment means suitable for establishing a connection over the network with the vendor's server (10) and for making a payment to said vendor using client software for handling payment that includes said secure payment protocol (SET), said message redirection means being **characterized in that** it is suitable for transmitting at least the call number of a payment mobile terminal (22) connected to said network and including a reader (221) for reading payment smart cards to a payment server (30) connected to said network and containing said client software for secure payment handling.

13. Message redirection means according to claim 12, **characterized in that** it is also suitable for transmitting the call number of the vendor's server (10) to the payment server (30), payment handling taking place between the payment server (30) and the mobile terminal (22) and the vendor's server (10).

14. Message redirection according to claim 12, **characterized in that** it is suitable for redirecting messages between the payment server (30) and the vendor's server (10), payment handling taking place between the payment server (30) and the mobile terminal (22) and the vendor's server (10) via the redirection means.

15. Message redirection means according to any one of claims 12 to 14, **characterized in that** it is also suitable for transmitting client authentication data to the payment server (30).
